# EUROPEAN PATENT SPECIFICATION

(11) **EP 2 197 673 B1**
(45) Date of publication and mention of the grant of the patent: **28.02.2018**
(21) Application number: 08833383.6
(22) Date of filing: 22.09.2008
(51) Int. Cl.: B32B 27/32

(54) **LAMINATED FABRIC CONSTRUCTION WITH POLYOLEFIN COMPOSITIONS**
LAMINIERTE STOFFKONSTRUKTION MIT POLYOLEFINZUSAMMENSETZUNGEN
CONSTRUCTION DE TISSU STRATIFIÉ AVEC DES COMPOSITIONS DE POLYOLÉFINE

(30) Priority: 28.09.2007 US 975918 P
(43) Date of publication of application: 23.06.2010
(73) Proprietor: Invista Technologies S.à.r.l., 9000 St. Gallen (CH)
(72) Inventor: COVELLI, Carmen, A., Chadds Ford PA 19317 (US); FARMER, Douglas, K., Greensboro NC 27407 (US); LAMBERT, James, M., Staunton VA 22401 (US); HONG, Liu, Waynesboro VA 22980 (US); WALDBAUER, Robert, O., Waynesboro VA 22980 (US); NGUYEN, Young, D., Crozet VA 22932 (US)
(74) Representative: Cockerton, Bruce Roger
(86) International application number: PCT/US2008/077189
(87) International publication number: WO 2009/042539

(56) References cited:
- EP-A- 1 273 435
- EP-A- 1 454 742
- EP-A- 1 632 340
- WO-A2-01/19900
- BE-A1- 749 995
- GB-A- 2 006 667
- JP-A- 2000 314 011
- JP-A- 2005 153 225
- JP-A- 2006 062 655
- US-A- 4 597 818
- US-A- 5 672 403
- US-A1- 2003 064 647
- US-A1- 2006 183 852
- US-A1- 2007 044 397
- US-A1- 2007 078 222
- US-B2- 6 495 249
- DATABASE WPI Week 199233 Thomson Scientific, London, GB; AN 1992-272767 XP002507278 & JP 04 185320 A (CHISSO CORP) 2 July 1992 (1992-07-02)
- DATABASE WPI Week 198333 Thomson Scientific, London, GB; AN 1983-737111 XP002507279 & JP 58 020273 A (SHOWA ELECTRIC WIRE CO LTD) 5 February 1983 (1983-02-05)
- DATABASE WPI Week 198745 Thomson Scientific, London, GB; AN 1987-316317 XP002507280 & JP 62 222844 A (TORAY IND INC) 30 September 1987 (1987-09-30)

## Description

### BACKGROUND OF THE INVENTION

### Field of the Invention

The present invention relates to articles including a multiple layer construction. The layers include fabric and/or polyurethane foam in combination with a polyolefin composition.

### Summary of Related Technology

Polyolefins can be used as adhesives for various substrates. Such thermoplastic adhesives often require heat and pressure to develop adequate bonding strength. Hot-melt adhesives, although environmentally safe and easily applied as films, generally have high set and poor recovery when subject to repeated stretch cycles. Therefore, adhesives that overcome the performance concerns of hot-melt adhesives are needed. Desirably, such adhesives will also provide other benefits to the fabric such as flexibility, shape retention and air permeability compared to conventional thermoplastic polyurethane and hot-melt adhesives.

### SUMMARY OF THE INVENTION

The invention is an article comprising multiple layers comprising at least three layers including: a fabric layer selected from the group consisting of a woven or knit fabric; a foam layer; and a polyolefin layer comprising at least one polyolefin composition selected from the group consisting of film, non-woven, powder, melt, dispersed powder, and combinations thereof, wherein the polyolefin comprises an ethylene-propylene copolymer; and wherein said polyolefin layer is adjacent to said foam layer, and said foam layer is adjacent to said fabric layer. The polyolefin composition may provide adhesion, moldability, shape retention, and flexibility properties for the article.

### DETAILED DESCRIPTION OF THE INVENTION

As used herein, the term "porous" refers to a substrate that includes voids or holes in the surface or at any point within or through the thickness of the substrate or to any material of which the articles of the present invention may come into contact. The substrate may be self-supporting and continuous or discontinuous and optionally include an additional substrate.

As used herein, the term "pressing" or "pressed" refers to an article that has been subjected to heat and/or pressure to provide a substantially planar structure.

As used herein, the term "foam" refers to any suitable foam that may be used in fabric construction such as polyurethane foam.

As used herein, the term "dispersion" refers to a system in which the disperse phase consists of finely divided particles, and the continuous phase can be a liquid, solid or gas.

As used herein, the term "article" refers to an article which comprises a film, non-woven, powder, dispersed powder or shaped article and a substrate, for example a textile fabric, which may or may not have at least one elastic property, in part, due to the application of a dispersion or shaped article as described herein. The article may be in any suitable configuration such as one-dimensional, two-dimensional and/or three-dimensional.

As used herein, the term "fabric" refers to a knitted, woven or nonwoven material. The knitted fabric may be flat knit, circular knit, warp knit, narrow elastic, and lace. The woven fabric may be of any construction, for example sateen, twill, plain weave, oxford weave, basket weave, and narrow elastic. The nonwoven material may be meltblown, spun bonded, wet-laid, carded fiber-based staple webs, and the like.

As used herein, the term "substrate" refers to any material to which the articles of the present invention may come into contact. A substrate can be substantially one dimensional as is a fiber, two dimensional as in a planar sheet, or a three dimensional article or a bumpy sheet. A planar sheet for example may comprise textile fabric, paper, flocked article, and web. A three dimensional article for example may comprise leather and foam. Other substrates may comprise wood, paper, plastic, metal, and composites such as concrete, asphalt, gymnasium flooring, and plastic chips.

As used herein, the term "hard yarn" refers to a yarn which is substantially non-elastic.

As used herein, the term "molded" article refers to a result by which the shape of an article or shaped article is changed in response to application of heat and/or pressure.

As used herein, the term "derived from" refers to forming a substance out of another object. For example, a film may be derived from a dispersion which can be dried.

As used herein, the term "modulus" refers to a ratio of the stress on an item expressed in force per unit linear density or area.

As used herein, the term "polyolefin" is meant to include polyolefins prepared from C₂ to C₂₀ monomers. This includes copolymers and terpolymers such as ethylene-propylene copolymers as a result of polymerization with a metallocene catalyst. Examples of useful elastic polyolefin copolymers are disclosed in U.S. Patent No. 6,867,260 to Datta et al..

Disclosed are multiple layer articles which include at least one layer of a polyolefin composition. These articles have at least two layers including at least one polyolefin composition. The polyolefin composition may form one of the layers, for example, as polyolefin composition on a substrate. The polyolefin composition may be in any suitable form such as a film, powder, non-woven, melt, dispersed powder, dry powder, and combinations thereof. The polyolefin composition may be placed adjacent to or between the layers and also may provide stretch and recovery, increased elastic modulus, adhesion, moldability, shape retention, and flexibility properties for the article. These articles may be formed into fabrics and/or garments.

A variety of different polyolefin compositions are useful with articles of some embodiments. For example, the articles of some embodiments may include a polyolefin solution or film cast from a solution (the solution includes a solvent such as boiling xylene, boiling heptane, hot 1,2,4-trichlorobenzene, hot ethylene glycol monobutylether, or hot orthodichlorobenzene) an aqueous dispersion including a polyolefin powder and optionally a solvent, or a substantially solvent free aqueous dispersion. For example, a polyolefin solution such as a spinning solution or gel may be used to cast a film, according to some embodiments of the present invention.

The article includes a multiple layer article including three or more layers where one layer is a polyolefin composition, the polyolefin composition is adjacent to a foam layer which is adjacent to a fabric layer. Combinations of these fabric/ foam/ polyolefin composition arrangements are also contemplated. For example, the article may include, in order, a fabric layer, a foam layer, a polyolefin composition layer, a foam layer, and a fabric layer. This article includes two separate fabric layers, two separate foam layers and a polyolefin composition layer. In any of these embodiments, the polyolefin composition may be a film, non-woven, powder, melt, dispersed powder, or combinations thereof. In addition, the article may include one or more polyolefin film and one or more layer of a polyolefin in a different form.

In an article that includes two or more layers, the polyolefin composition may form the external layer. Including the polyolefin composition on an external surface forms many advantageous functions. For example, the polyolefin composition may provide an anchor or area of increased friction to reduce the relative movement between the article including the polyolefin composition and an external substrate. This is particularly useful when the article is an undergarment including a skin-contacting surface (where the wearer's skin is the substrate). Alternatively, the substrate may be outer clothing which is in contact with the polyolefin composition of the inventive article. Where the substrate is outer clothing of a wearer and the article is worn as an undergarment, the article prevents or reduces the relative movement of the outer garment. In addition, an outer garment (e.g. a dress) may include a polyolefin composition to maintain the relative placement of an inner garment (e.g. a slip).

After the layers of fabric, foam, and the polyolefin composition have been selected, they may subsequently be adhered through pressing or molding to form flat or shaped articles. The processes to prepare the pressed and molded articles of some embodiments include the use of pressure and heat as necessary. For example, heat may be applied at about 150°C to about 200°C or about 160°C to about 180°C, including about 165°C for a sufficient time to achieve a molded article. Suitable times for application of heat include, but are not limited to, from about 30 sec to about 360 sec including from about 45 sec to about 120 sec. Bonding may be effected by any known method, including but not limited to, microwave, infrared, conduction, ultrasonic, pressure application over time (i.e. clamping) and combinations thereof.

Due the application of heat and pressure to the articles including polyolefin films or non-wovens, powder, and melt and given that films and fabrics are themselves porous materials, it is recognized that the film or non-woven may partially or completely impregnate the fabric or foam of the article. For example, the polyolefin composition may form a layer which is partially separate from the surrounding layers, or may be completely transferred to the surrounding layer or layers to form an integrated article without a distinguishably separate polyolefin composition layer.

One application of the multi-layer articles of the present invention is body-shaping garments such as brassieres (especially in cups or wings) and men's undergarments. These articles can provide the desirable features of comfort, body shaping and support while still providing comfort, breathability, air permeability, moisture/vapor transport, wicking, and combinations thereof. In the articles of some embodiments of the present invention, the layers may take on predetermined shapes and may be arranged in predetermined orientations relative to each other in the design of a molded or shaped article such as the cups of a brassiere construction. The layers of these fabrics may be used either alone or in combination with other materials that are sewn, glued or otherwise applied to the fabrics.

In some embodiments there is a system for the construction of a body-shaping garment with integrated shaping ability provided by the fabric. This system of construction may be used in a variety of different garment constructions such as activewear, sportswear, men's and women's intimate apparel such as bras, underwear, panties, shaping garments, legwear and hosiery such as pantyhose, ready-to-wear garments such as denim jeans, camisoles, tailored shirts, and pants among others. This construction may be applied to any formable body area. While many advantages of the fabric constructions are included, it is further recognized that the utility is not limited to garments, but also finds applicability with any shapeable or formable medium, including cushions for furniture which are also subject to movement and potential slipping of a fabric in contact with the shapeable area.

In order to add additional support and other features, the polyolefin composition may be added to different areas of the article. For example, when a film is used, it may either extend through the entire area of the article or to a selected portion to provide different benefits. For example, a brassiere may include a layered fabric of some embodiments in the cup portion. In the brassiere cup, it can be useful to use a portion of film in the lower portion of the cup for support, in a central portion of the cup for modesty, in the side portion for shaping, or in specific areas for embellishment or decoration.

Reducing the amount of film in a multi-layer fabric to meet the needs of a fabric may also increase the air permeability of the fabric. Air permeability may also be increased by altering the film to make it porous or to become porous (i.e. "latent" breathability) or by perforating the film.

The polyolefin compositions provide additional benefits when used in a garment. These benefits include shape retention, shaping ability, adhesion, maintaining a fraction of the substrates, moisture management, and vapor permeability.

The polyolefin compositions may be added in other constructions depending on the desired function which may be a visual aesthetic. The polyolefin films, non-woven, powder, dispersed powder or melt may be added to an article, fabric or garment to be molded into a design, to adhere embellishments such as decorative fabrics and glitter, in the form of a label or logo, and combinations thereof.

In some embodiments, the polyolefin composition may act as an adhesive to attach two or more layers of fabric or foam, or to attach a layer of fabric to foam. One suitable method for accomplishing this is to apply a powder or dispersed powder or melt to a layer by any suitable method. Methods for applying the dispersions of some embodiments include spraying, kissing, printing, brushing, dipping, padding, dispensing, metering, painting, sprinkling and combinations thereof. This may be followed by application of heat and/or pressure.

Other adhesives may be included in the multiple layer articles of some embodiments of the invention. Examples of adhesives include thermoset or thermoplastic adhesives, pressure sensitive adhesives, hot melt adhesives, and combinations thereof. The adhesive may be used to adhere the different layers and may be applied to any of the fabric, foam or polyolefin films, non-woven, powder, dispersed powder, or melt. Moreover, the polyolefin composition may also be used as an adhesive in contact with one or more layer such as any fabric, foam or polymer film such as the polyurethaneurea films described in U.S. Patent No. 7,240,371.

As described above, there are a variety of fabric constructions that are useful for the articles disclosed herein. The polyolefin composition included in the articles may be in any suitable form in any of these examples. In addition, the polyolefin composition may provide structural properties, flexibility, adhesion, or any combination of these. The order of layer arrangement may be (1) fabric layer, foam layer, polyolefin layer or (2) fabric layer, foam layer, polyolefin layer, foam layer, fabric layer. An adhesive may be included adjacent to or between layers to adhere any of the layers. Alternatively, the polyolefin composition may be the adhesive.

A variety of different fibers and yarns may be used with the fabrics of some embodiments. These include cotton, wool, acrylic, polyamide (nylon), polyester, spandex (elastane), regenerated cellulose, rubber (natural or synthetic), bamboo, silk, soy or combinations thereof.

The present invention can also provide shaped articles which may or may not be adhesive that can be coated on a release paper, whereby polyolefin compositions of the invention can be used for bonding and lamination to substrates including textile fabrics. The adhesion can be activated by applying heat and/or pressure onto a substrate and the adhesive film with a residence time of less than one minute, for example, from about 15 seconds to about 60 seconds. The thus bonded articles have good stretch/recovery properties and are expected to be durable in normal wear and wash cycles.

The polyolefin compositions of some embodiments are particularly suitable for adhesive shaped articles, which can be used for fabric bonding, lamination, and adhesion purposes when applied with heat and pressure for a relatively short period of time. Pressures, can for example, range from about atmospheric pressure to about 410 kPa (60 psi) and times can range from less than about one second to about 30 minutes in accordance with the bonding method used.

Such shaped articles may be made by casting the melt or dispersed powder onto a release paper and drying to remove water at temperatures below about 100°C through commercially available processes to form a film on the paper. The formed film sheets can be slit into strips of desired width and wound-up into spools for later use in applications to form stretch articles, for example textile fabrics. Examples of such applications include: stitch-less or seamless garment constructions; seam seal and reinforcement; labels and patches bonding to garments; and localized stretch/recovery enhancement. The adhesion bonding can be developed in the temperature range of from about 100°C to about 200°C, such as from about 130°C to about 200°C, for example, from about 140°C to about 180°C, in a period of 0.1 seconds to several minutes, for example, less than about one minute. Typical bonding machines are Sew Free (commercially available from SewSystems in Leicester, England), Macpi hemming machine (commercially available from the Macpi Group in Brescia, Italy), Framis hot air welding machine (commercially available from Framis Italy, s p.a. in Milano, Italy). This bonding is expected to be strong and durable when exposed to repeated wear, wash, and stretch in a textile fabric garment.

The film, non-woven, melt, or shaped article may be pigmented or colored and also may be used as a design element in that regard.

In addition, articles with laminated films or non-wovens can be molded. For example, fabric can be molded under conditions appropriate for the hard yarn in the fabric. Also, molding may be possible at temperature which will mold the shaped article or dispersion, but below temperatures suitable for molding the hard yarn.

Lamination can be carried out to secure the shaped article to a fabric using any method wherein heat is applied to the laminate surface. Methods of heat application include, for example, ultrasonic, direct heat, indirect heat, and microwave.

Methods and means for applying the polyolefin compositions of some embodiments include, but are not limited to: roll coating (including reverse roll coating); use of a metal tool or knife blade (for example, pouring a dispersion onto a substrate and then casting the dispersion into uniform thickness by spreading it across the substrate using a metal tool, such as a knife blade); spraying (for example, using a pump spray bottle); dipping; painting; printing; stamping; and sprinkling, impregnating the article. These methods can be used to apply the melt, powder, or dispersed powder directly onto a substrate without the need of further adhesive materials and can be repeated if additional/heavier layers are required. The dispersions, powder or melt can be applied to any fabrics of knits, wovens or nonwovens made from synthetic, natural, or synthetic/natural blended materials for coating, bonding, lamination and adhesion purposes. The water in the dispersion can be eliminated with drying during the processing (for example, via air drying or use of an oven), leaving the precipitated and coalesced polyolefin layer on the fabrics to form an adhesive bond.

The thickness of the films, melts, solutions, and dispersions may vary depending on the application. In the case of dry shaped articles, the final thickness may, for example, range from about 3 µm (0.1 mil) to about 6.35 mm (250 mil), such as from about 13 µm (0.5 mil) to about 635 µm (25 mil), including from about 25 to about 152 µm (about 1 to about 6 mil) (one mil = one thousandth of an inch).

Suitable thicknesses include about 13 µm (0.5 mil) to about 305 µm (12 mil), about 13 to about 254 µm (about 0.5 to about 10 mil), and about 38 µm (1.5 mil) to about 229 µm (9 mil). For aqueous dispersions, the amount used may, for example, range from about 2.5 g/m² to about 6.40 kg/m², such as from about 12.7 to about 635 g/m², including from about 25.4 to about 152.4 g/m².

Types of planar sheets and tapes that can be coated with the polyolefin compositions include, but are not limited to, textile fabrics, including wovens and knits; nonwovens; scrim and leather (real or synthetic), paper, metal, plastic, polyurethaneurea film, and combinations thereof.

Other articles that can be produced using the polyolefin compositions of some embodiments include, but are not limited to: apparel, which includes any type of garment or article of clothing; knitted gloves; upholstery; hair accessories; bed sheets; carpet and carpet backing; conveyor belts; medical applications, such as stretch bandages; personal care items, including incontinence and feminine hygiene products; and footwear. Articles coated with polyolefin compositions may be used as sound suppression articles.

Non-elastic fabrics laminated to polyolefin compositions can have improved stretch and recovery and improved molding properties.

Articles the polyolefin compositions of some embodiments may be molded. The articles may be made with multiple layers of substrate and polyolefin composition. The multi-layered articles also may be molded. Molded and non-molded articles may have different levels of stretch and recovery. The molded articles may be used in a body shaping or body supporting garment, such as a brassiere.

Examples of apparel or garments that can be produced using the polyolefin compositions of some embodiments, include but are not limited to: undergarments, brassieres, panties, lingerie, swimwear, shapers, camisoles, hosiery, sleepwear, wetsuits, ties, scrubs, space suits, uniforms, hats, garters, sweatbands, belts, activewear, outerwear, rainwear, cold-weather jackets, pants, shirtings, dresses, blouses, men's and women's tops, sweaters, corsets, vests, knickers, socks, knee highs, dresses, blouses, aprons, tuxedos, bisht, abaya, hijab, jilbab, thoub, burka, cape, costumes, diving suit, kilt, kimono, jerseys, gowns, protective clothing, sari, sarong, skirts, spats, stola, suits, straitjacket, toga, tights, towel, uniform, veils, wetsuit, medical compression garments, bandages, suit interlinings, waistbands, and all components therein..

Another aspect of the invention is an article comprising the shaped article and a substrate wherein the shaped article and the substrate are attached to form a laminate whereby coefficient of friction of the elastic laminate is greater than that of the substrate alone. Examples of this are a waistband with a coating or film comprising the polyolefin composition which prevents slippage of the garment from another garment such as a blouse or shirt, or alternately prevents slippage of the waistband on the skin of the garment wearer.

The features and advantages of the present invention are more fully shown by the following examples which are provided for purposes of illustration, and are not to be construed as limiting the invention in any way.

### EXAMPLES

Each of the polyolefin compositions as set forth in Table 1 was included in one half of a bra mold to provide a control cup and an inventive cup (which included the polyolefin composition) which were simultaneously molded under identical conditions. A conventional foam bra cup molding apparatus was heated to 180°C. A nylon/LYCRA® spandex warp-knitted fabric was prelaminated to a 5 mm thick polyurethane foam sheet to form a fabric/foam laminate. Two such fabric/foam laminates were placed foam-to-foam, with the fabric layers facing out. One each of the four example polyolefin compositions, in turn, was inserted between the foam layers and covering one half of the mold, i.e., one cup. The mold was closed with 500 kPa (5 bar) pressure and held closed for 120 seconds. The mold was then opened and the molded cups were removed and allowed to cool.

The sets of test/control cups were evaluated (shape, shape retention, height, smoothness, and tactility). The cups were then subjected to five home laundering cycles. The cups were again evaluated. The result of the testing is shown in Table 2.

| Table 1 - Polyolefin Compositions | | | | |
|---|---|---|---|---|
| | Example | | | |
| | 1 | 2 | 3 | 4 |
| Polymer (1) | VISTAMAXX™ 2125 specialty elastomer | VISTAMAXX™ 2125 specialty elastomer | VISTAMAXX™ 2125 specialty elastomer | VISTAMAXX™ 2125 specialty elastomer |
| Polymer (2) | none | polypropylene | none | polypropylene |
| Construction | Single-layer spunbond | Double-layer spunbond | Spunbond/meltblown | Spunbond/meltblown construction |
| | | (1)/(1)/(2) | | (2)/(1)/(1)/(2) |
| Basis weight | 60 g/m² | 75 g/m² (60 g/m² + 15 g/m²) | 128 g/m² (120 g/m² / 8 g/m²) | 128 g/m² (4 g/m² / 60 g/m² / 60 g/m² / 4 g/m²) |

| Table 2 - Observations | |
|---|---|
| Inventive Laminate | Corresponding Control |
| Molded shape more pronounced, taller | Less defined, shorter |
| Shape retained after laundering | After laundering cup had "lumpy/bumpy appearance |
| Molded shape was integrated and maintained when cup was reversed (inside out) | When cup was reversed, surface was dimpled |

As can be seen in Table 2, the inventive laminate structures including the polyolefin compositions demonstrated improved properties over the control.

While the present invention has been described in an illustrative manner, it should be understood that the terminology used is intended to be in a nature of words or description rather than of limitation. Furthermore, while the present invention has been described in terms of several illustrative embodiments, it is to be appreciated that those skilled in the art will readily apply these teachings to other possible variations of the invention.

## Claims

1. An article comprising multiple layers comprising at least three layers including:
a fabric layer selected from the group consisting of a woven or knit fabric;
a foam layer; and
a polyolefin layer comprising at least one polyolefin composition selected from the group consisting of film, non-woven, powder, melt, dispersed powder, and combinations thereof, wherein the polyolefin comprises an ethylene-propylene copolymer; and
wherein said polyolefin layer is adjacent to said foam layer, and said foam layer is adjacent to said fabric layer.

2. The article of claim 1, wherein said polyolefin composition is cast from polyolefin melt.

3. The article of claim 1, further comprising a second fabric layer and a second foam layer, wherein the polyolefin layer is adjacent to a foam layer on each side and each foam layer is adjacent to a fabric layer.

4. The article of claim 1, wherein the article is molded or pressed.

5. The article of claim 1, wherein the polyolefin composition extends throughout the entire area of the multiple layer article or wherein the polyolefin composition extends to a portion of the area of the multiple layer article.

6. The article of claim 1, wherein at least two polyolefin compositions are included.

7. The article of claim 1, wherein said polyolefin composition is porous or perforated.

8. The article of claim 1 in the form of a garment.

9. The article of claim 1, further comprising an at least one adhesive between two or more layers.

10. The article of claim 9, wherein said adhesive is a hot melt adhesive, a contact adhesive, a thermoset, a thermoplastic, or a polyurethaneurea aqueous dispersion.

## Patentansprüche

1. Artikel, umfassend mehrere Schichten, umfassend mindestens drei Schichten, beinhaltend:
eine Textilschicht, ausgewählt aus der Gruppe bestehend aus Web- oder Maschenware,
eine Schaumstoffschicht sowie
eine Polyolefinschicht, umfassend mindestens eine Polyolefinmasse, ausgewählt aus der Gruppe bestehend aus Film, Vlies, Pulver, Schmelze, Dispersionspulver und deren Kombinationen, wobei das Polyolefin ein Ethylen-Propylen-Copolymerisat umfasst, und
wobei die Polyolefinschicht an die Schaumstoffschicht und diese wiederum an die Textilschicht angrenzt.

2. Artikel nach Anspruch 1, bei dem es sich bei der Polyolefinmasse um eine durch Gießen aus einer Polyolefinschmelze hergestellte handelt.

3. Artikel nach Anspruch 1, ferner umfassend eine zweite Textilschicht und eine zweite Schaumstoffschicht, wobei die Polyolefinschicht beidseitig an eine Schaumstoffschicht und diese wiederum jeweils an eine Textilschicht angrenzt.

4. Artikel nach Anspruch 1, bei dem es sich dabei um einen durch Formen oder Pressen hergestellten Artikel handelt.

5. Artikel nach Anspruch 1, bei dem sich die Polyolefinmasse voll- oder teilflächig im Mehrschichtartikel erstreckt.

6. Artikel nach Anspruch 1, bei dem mindestens zwei Polyolefinmassen enthalten sind.

7. Artikel nach Anspruch 1, bei dem die Polyolefinmasse porös oder perforiert ausgebildet ist.

8. Artikel nach Anspruch 1 als Kleidungsstück.

9. Artikel nach Anspruch 1, ferner umfassend mindestens einen Klebstoff zwischen zwei oder mehr Schichten.

10. Artikel nach Anspruch 9, bei dem es sich bei dem Klebstoff um Schmelzkleber, Haftkleber, duromeren Kunststoff, thermoplastischen Kunststoff oder als wässrige Dispersion vorliegenden Polyurethanharnstoff handelt.

## Revendications

1. Article comportant plusieurs couches comprenant au moins trois couches, y compris :
une couche de tissu sélectionnée dans le groupe constitué d'un tissu tissé ou tricoté ; une couche de mousse ; et
une couche de polyoléfine comprenant au moins une composition de polyoléfine sélectionnée dans le groupe constitué d'un film, d'un non-tissé, d'une poudre, d'une masse fondue, d'une poudre dispersée, et de combinaisons de ceux-ci, la polyoléfine comprenant un copolymère d'éthylène-propylène ; et
dans lequel ladite couche de polyoléfine est adjacente à ladite couche de mousse, et ladite couche de mousse est adjacente à ladite couche de tissu.

2. Article selon la revendication 1, dans lequel ladite composition de polyoléfine est coulée à partir d'une masse fondue de polyoléfine.

3. Article selon la revendication 1, comprenant en outre une deuxième couche de tissu et une deuxième couche de mousse, dans lequel la couche de polyoléfine est adjacente à une couche de mousse sur chaque côté et chaque couche de mousse est adjacente à une couche de tissu.

4. Article selon la revendication 1, l'article étant moulé ou pressé.

5. Article selon la revendication 1, la composition de polyoléfine s'étendant à travers toute la surface couverte par l'article à plusieurs couches ou la composition de polyoléfine s'étendant à travers une partie de la surface couverte par l'article à plusieurs couches.

6. Article selon la revendication 1, comprenant au moins deux compositions de polyoléfine.

7. Article selon la revendication 1, dans lequel ladite composition de polyoléfine est poreuse ou perforée.

8. Article selon la revendication 1, sous la forme d'un vêtement.

9. Article selon la revendication 1, comprenant en outre au moins un adhésif entre deux couches ou plus.

10. Article selon la revendication 9, dans lequel ledit adhésif est un adhésif thermofusible, un adhésif de contact, un composé thermodurcissable, un composé thermoplastique ou une dispersion aqueuse de polyuréthane-urée.
